# EUROPÄISCHE PATENTSCHRIFT

(11) **EP 0 878 361 B1**
(45) Veröffentlichungstag und Bekanntmachung des Hinweises auf die Patenterteilung: **02.11.2005**
(21) Anmeldenummer: 98106952.9
(22) Anmeldetag: 16.04.1998
(51) Int. Cl.: B60R 21/20

(54) **Seitenaufprallschutzeinrichtung für die Insassen eines Fahrzeuges**
Side impact protection device for vehicle passengers
Dispositif de protection en cas de choc latéral pour l'occupant d'un véhicule

(30) Priorität: 16.05.1997 DE 19720587
(43) Veröffentlichungstag der Anmeldung: 18.11.1998
(73) Patentinhaber: Dr.Ing.h.c. F. Porsche Aktiengesellschaft, 70435 Stuttgart (DE)
(72) Erfinder: Heinz, Martin, 70182 Stuttgart (DE); Trick, Fred, 71277 Rutesheim (DE); Bögge, Herbert, 75446 Wiernsheim (DE); Dietrich, Günter, 71691 Freiberg (DE); Guhl, Hermann, 72108 Rottenburg (DE)

(56) Entgegenhaltungen:
- EP-A- 0 471 746
- EP-A- 0 523 704
- EP-A- 0 734 916
- DE-A- 4 309 925
- DE-U- 29 616 891
- US-A- 5 437 471
- US-A- 5 480 182
- PATENT ABSTRACTS OF JAPAN vol. 1996, no. 07, 31. Juli 1996 (1996-07-31) -& JP 08 072658 A (TOYODA GOSEI CO LTD;TOYOTA MOTOR CORP), 19. März 1996 (1996-03-19)

## Beschreibung

Die Erfindung betrifft eine Seitenaufprallschutzeinrichtung für einen Insassen eines Fahrzeuges in Form eines aufblasbaren Gassackes gemäß dem Oberbegriff des Patentanspruchs 1.

Bei einer bekannten Seitenaufprallschutzeinrichtung der eingangs genannten Gattung (DE 195 11 511 A1) ist der Boden des Gehäuses auf die dem Insassen zugekehrte Seite des Türinnenblechs aufgesetzt und mittels außenliegender Halter am Türinnenblech befestigt. Das Türinnenblech ist im Befestigungsbereich des Gehäuses relativ biegeweich ausgebildet, so dass es sich beim Entfalten des Gaskissens leicht verbiegen kann. Zur Unterbringung des aus einem Gehäuse, einem Gasgenerator und einem Gassack bestehenden Einbaumoduls muss zwischen dem Türinnenblech und der Innenseite der Türverkleidung ein relativ großer Hohlraum freigehalten werden, wodurch die freie Gestaltung der Türverkleidung eingeschränkt wird. Ferner besteht die Gefahr, dass der Gassack beim Aufblasen an den relativ scharfkantigen Rändern des Gehäuses beschädigt wird.

Aus dem Patent Abstract of Japan, vol. 1996, No. 08072658, 31.07.1996 geht eine Seitenaufprallschutzeinrichtung für einen Insassen eines Fahrzeuges in Form eines aufblasbaren Gassackes hervor, wobei ein zumindest aus einem Gehäuse, einem Gasgenerator und einem Gassack bestehendes Einbaumodul an einem Türinnenblech einer Seitentür befestigt ist und an einem aufrechten Wandabschnitt einer vorgelagerten Türverkleidung eine Austrittsöffnung für den aufgeblasenen Gassack vorgesehen ist.

Das aus einem Unterteil und einem mit diesem verbundenen Oberteil bestehende Gehäuse weist einen am Unterteil angeordneten trogförmigen Aufnahmeabschnitt, einen am Oberteil vorgesehenen Ausschusskanal und einen Befestigungsabschnitt auf, wobei der Aufnahmeabschnitt durch eine Ausnehmung des Türinnenblechs hindurchgeführt ist und in den dahinterliegenden Türhohlraum hineinragt.
Bei dieser Anordnung sind die Befesfigungsabschnitte für das Gehäuse am freien, oberen Ende des Ausschusskanals angeordnet und werden durch örtlich abgestellte Laschen gebildet. Im Verbindungsbereich des Unterteils mit dem Oberteil des Gehäuses erfolgt lediglich die Anbindung des Gassackes an das Gehäuse.

Aufgabe der Erfindung ist es, ein Gehäuse für eine Seitenaufprallschutzeinrichtung und das angrenzende Türinnenblech so weiterzubilden, dass der vorhandene Türhohlraum besser genutzt und bei eingebautem Gehäuse ein steifer Verbund des Gehäuses mit dem Türinnenblech erzielt wird.

Erfindungsgemäß wird diese Aufgabe durch die Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß das aus einem trogförmigen Aufnahmeabschnitt für den Gasgenerator, einem vorgelagerten Ausschußkanal für den Gassack und einem plattenförmigen Befestigungsabschnitt bestehende Gehäuse einen relativ steifen Aufbau aufweist, wobei durch den zumindest abschnittsweise durch eine Ausnehmung des Türinnenblechs in den dahinterliegenden Türhohlraum hineinragenden Aufnahmeabschnitt auch der in Richtung Türfensterscheibe reichende Hohlraum des Türkörpers zur Aufnahme des Einbaumoduls genutzt wird.

Der durch die Ausnehmung gebildete Türausschnitt ist durch die randseitige Abstellung des Türinnenblechs in Verbindung mit der darüberliegenden Fensterschachtverstärkung sehr steif. Der Ausschußkanal wird durch örtlich angebrachte Sicken und die umlaufende Umbördelung ausgesteift. Die Umbördelung schützt zudem den Gassack beim Aufblasen vor Beschädigungen. Durch den steifen Ausschußkanal wird die Türverkleidung beim Entfalten des Gassacks nicht belastet. Ferner dient der Ausschußkanal dazu, den Gassack an der Türverkleidung vorbeizuführen. Das Gehäuse ist auf die Türabdichtfolie aufgesetzt. Beim Aufblasen des Gassacks erfolgt keine Verformung des Türinnenblechs. Die vorgesehene modulfeste Vertauschsicherung am Gehäuse gewährleistet die richtig Einbaulage des Einbaumoduls an der zugehörigen Seitentür. Ferner ist am Gehäuse ein Stecker für den Gasgenerator festlegbar.

Ein Ausführungsbeispiel der Erfindung ist in der Zeichnung dargestellt und wird im folgenden näher erläutert.

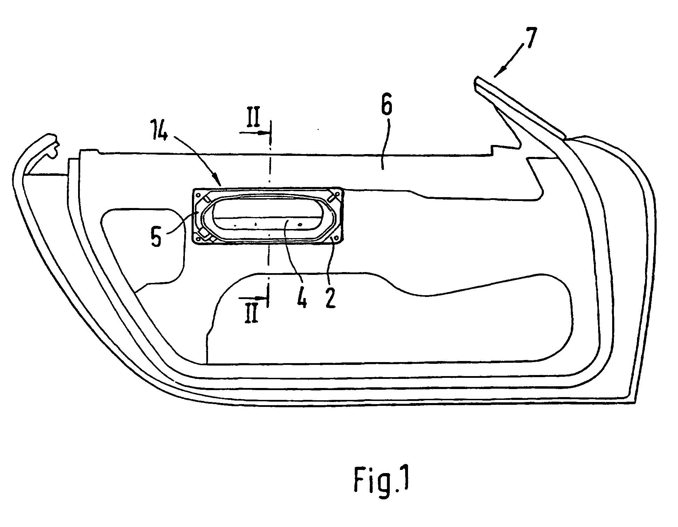

Es zeigt
- Fig. 1: eine Seitenansicht von innen auf ein Türinnenblech einer Fahrzeugtür, wobei am Türinnenblech ein Einbaumodul einer Seitenaufprallschutzeinrichtung befestigt ist,
- Fig. 2: einen Schnitt nach der Linie II-II der Fig. 1 in größerer Darstellung und

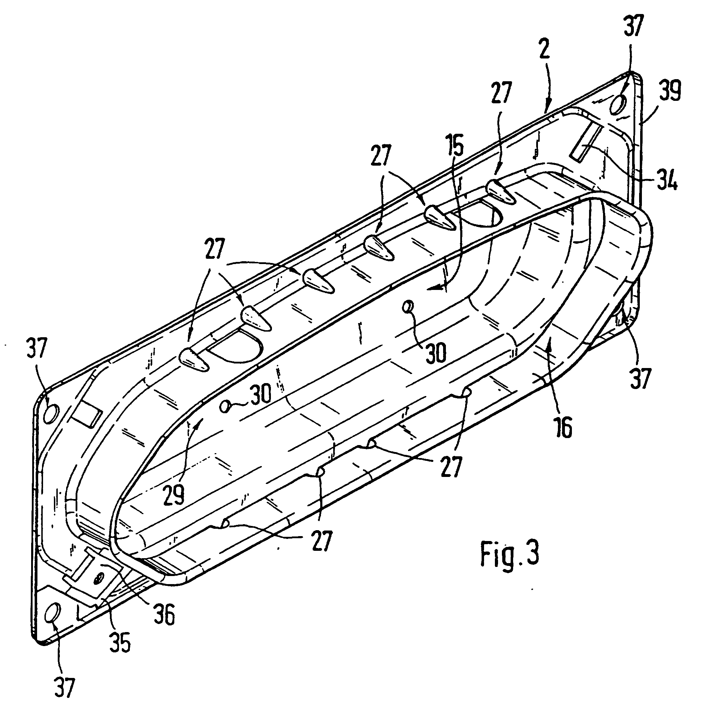

- Fig. 3: eine perspektivische Ansicht von schräg innen auf das Gehäuse des Einbaumoduls in größerer Darstellung.

Eine Seitenaufprallschutzeinrichtung 1 für einen Insassen eines Fahrzeuges umfaßt ein aus einem Gehäuse 2, einem Gasgenerator 3 und einem zusammengefalteten Gassack 4 bestehendes vorgefertigtes Einbaumodul 5, das einem Türinnenblech 6 einer Seitentür 7 befestigt ist.

An einem aufrechten Wandabschnitt 8 einer vorgelagerten Türverkleidung 9 ist eine Austrittsöffnung 10 für den aufgeblasenen Gassack 4 vorgesehen, wobei die Austrittsöffnung 10 im Ausführungsbeispiel durch eine zweiteilige Abdeckung 11 verkleidet ist. Beim Aufblasen des Gassackes 4 wird die eine Klappenhälfte 12 nach unten hin und die andere Klappenhälfte 13 nach oben hin in eine Freigabestellung verschwenkt.

Zur Aufnahme des Einbaumoduls 5 ist in einem oberen Bereich des Türinnenblechs 6 - kurz unterhalb der Gürtellinie - eine rechteckförmige Ausnehmung 14 vorgesehen, wobei sich die längeren Seiten der rechteckförmigen Ausnehmung 14 in Längsrichtung der Seitentür 7 und kürzeren Seiten in Höhenrichtung der Seitentür 7 erstrecken.

Das Gehäuse 2 des Einbaumoduls 5 umfaßt einen langgestreckten, trogförmigen Aufnahmeabschnitt 15 für den durch einen länglichen Rohrgenerator gebildeten Gasgenerator 3, einen vorgelagerten Ausschußkanal 16 für den Gassack 4 und einen etwa senkrecht zum Ausschußkanal 16 ausgerichteten plattenförmigen Befestigungsabschnitt 17 zur Festlegung des Gehäuses 2 am Türinnenblech 6.

In Fahrzeugquerrichtung gesehen erstreckt sich der aufrechte Befestigungsabschnitt 17 etwa in der Mitte zwischen Ausschußkanal 16 und Aufnahmeabschnitt 15.

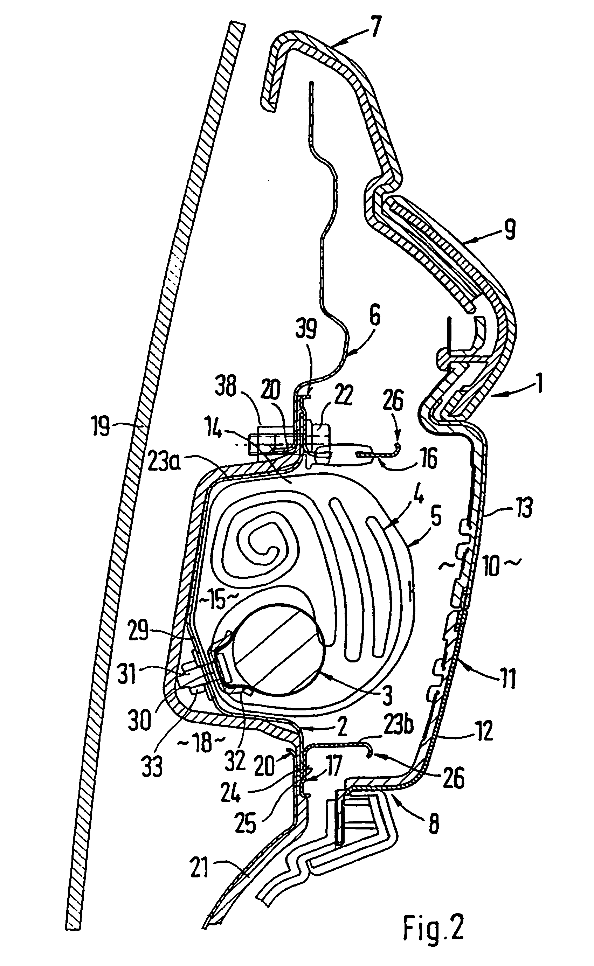

Erfindungsgemäß ist der Aufnahmeabschnitt 15 durch die Ausnehmung 14 des Türinnenblechs 6 hindurchgeführt und ragt in den dahinterliegenden Türhohlraum 18 hinein. Mit Abstand zum Aufnahmeabschnitt 15 verläuft innerhalb des Türhohlraumes die höherverstellbare Türfensterscheibe 19. Aus Steifigkeitsgründen weist das Türinnenblech 6 am Rand der Ausnehmung 14 zumindest bereichsweise eine in Richtung Türfensterscheibe 19 verlaufende gerundete Abstellung 20 auf. Das Gehäuse 2 ist von der Innenseite her auf eine am Türinnenblech 6 festgeklebte Türabdichtfolie 21 aufgesetzt und wird mittels an den Ecken des etwa rechteckförmigen Befestigungsabschnitts 17 vorgesehenen Befestigungsschrauben 22 am Türinnenblech 6 in Lage gehalten. Die Befestigungsschrauben 22 werden durch Öffnungen 37 des Befestigungsabschnitt 17 hindurchgeführt und in türseitig angeordneten Schweiß- oder Einschiebmuttern 38 eingedreht (Fig. 2).

Gemäß Fig. 2 besteht das Gehäuse 2 aus einem Unterteil 23a und einem mit diesem verbundenen Oberteil 23b. Am Unterteil 23a ist der trogförmige, in Höhenrichtung gesehen relativ schmale Aufnahmeabschnitt 15 ausgebildet, wogegen am Oberteil 23b der Ausschußkanal 16 vorgesehen ist. Gleichgerichtete, miteinander durch Schweißen verbundene Flansche 24, 25 von Oberteil 23b und Unterteil 23a bilden den plattenförmigen Befestigungsabschnitt 17, der an seinem äußeren Ende eine umlaufende versteifende Abstellung 39 aufweist. Der Ausschußkanal 16 ist auf der der Austrittsöffnung 10 zugekehrten Seite umlaufend mit einer nach außen gerichteten Abstellung oder Umbördelung 26 versehen. Hierdurch wird der Gassack 4 beim Aufblasen vor einer Beschädigung geschützt. Durch den Ausschußkanal 16 wird der aufgeblasene Gassack 4 an der Türverkleidung 9 vorbeigeleitet. Ferner ist der Ausschußkanal 16 oben und unten im Verbindungsbereich zum Befestigungsabschnitt 17 jeweils mit mehreren nebeneinanderliegend angeordneten Versteifungssicken 27 versehen, wodurch ein steifer Ausschußkanal 16 geschaffen wird. Das Gehäuse 2 ist im Ausführungsbeispiel aus Stahlblech gefertigt. Das Gehäuse 2 könnte jedoch auch einteilig ausgebildet und aus Alu-Druckguß hergestellt sein.

Am unteren Rand des Befestigungsabschnitts 17 ist auf der dem Türinnenblech 6 zugekehrten Seite zumindest ein vorstehender Zapfen angebracht, der bei der Montage des Gehäuses 2 in eine korrespondierende Öffnung des Türinnenblechs 6 eingreift (Vertauschsicherung, nicht näher dargestellt). An einem Boden 29 des Aufnahmeabschnitts 15 sind örtlich Bohrungen 30 vorgesehen, durch die Befestigungselemente (Schraubbolzen 31) eines innerhalb des Gehäuses 2 liegenden Generatorhalters 32 hindurchgesteckt sind. Von der Außenseite her werden auf die Schraubbolzen 31 Scheiben und Muttern 33 aufgesetzt. Außerhalb des Ausschußkanals 16 ist an einem Endbereich des Befestigungsabschnitts 17 ein rechteckförmiger Durchbruch 34 ausgebildet, an dem ein nicht näher gezeigter Stecker einer zum Gasgenerator 3 führenden Leitung einsetzbar und durch Verdrehen festsetzbar ist.

Diagonal gegenüberliegend zum Durchbruch 34 ist am Gehäuse 2 ebenfalls außerhalb des Ausschußkanals 16 ein Halter 35 mit einer Einschiebemutter 36 vorgesehen, an der die vorgelagerte Abdeckung 11 mittels einer Befestigungsschraube festlegbar ist.

## Patentansprüche

1. Seitenaufprallschutzeinrichtung (1) für einen Insassen eines Fahrzeuges in Form eines aufblasbaren Gassackes (4), wobei ein zumindest aus einem Gehäuse (2), einem Gasgenerator (3) und einem Gassack (4) bestehendes Einbaumodul (5) an einem Türinnenblech (6) einer Seitentür (7) befestigt ist und an einem aufrechten Wandabschnitt (8) einer vorgelagerten Türverkleidung (9) eine Austrittsöffnung (10) für den aufgeblasenen Gassack (4) vorgesehen ist, wobei das aus einem Unterteil (23a) und einem mit diesem verbundenen Oberteil (23b) bestehende Gehäuse (2) einen am Unterteil (23a) angeordneten trogförmigen Aufnahmeabschnitt (15), einen am Oberteil (23b) vorgesehenen Ausschusskanal (16) und einen Befestigungsabschnitt (17) aufweist und der Aufnahmeabschnitt (15) durch eine Ausnehmung (14) des Türinnenblechs (6) hindurchgeführt ist und in den dahinterliegenden Türhohlraum (18) hineinragt, **dadurch gekennzeichnet, dass** der plattenförmige Befestigungsabschnitt (17) zur Festlegung des Gehäuses (2) am Türinnenblech (6) zwischen dem trogförmigen Aufnahmeabschnitt (15) und dem Ausschusskanal (16) angeordnet ist und durch gleichgerichtete Flansche (24, 25) das Oberteil (23b) das Unterteil (23a) gebildet wird und dass der örtlich mit Versteifungssicken (27) versehene Ausschusskanal (16) auf der der Austrittsöffnung (10) zugekehrten Seite eine nach außen gerichtete umlaufende Abstellung oder Umbördelung (26) aufweist.

2. Seitenaufprallschutzeinrichtung nach Anspruch 1, **dadurch gekennzeichnet, dass** das Gehäuse (2) aus Stahlblech gefertigt ist.

3. Seitenaufprallschutzeinrichtung nach Anspruch 1, **dadurch gekennzeichnet, dass** am Befestigungsabschnitt (17) auf der dem Türinnenblech (6) zugekehrten Seite zumindest ein vorstehender Zapfen angebracht ist, der in eine korrespondierende Öffnung des Türinnenblechs (6) eingreift.

4. Seitenaufprallschutzeinrichtung nach Anspruch 1, **dadurch gekennzeichnet, dass** das Türinnenblech (6) am Rand der Ausnehmung (14) eine in Richtung Türfensterscheibe (19) verlaufende gerundete Abstellung (20) aufweist.

5. Seitenaufprallschutzeinrichtung nach einem oder mehreren der vorangegangenen Ansprüche, **dadurch gekennzeichnet, dass** am Boden (29) des Aufnahmeabschnitts (15) örtlich Bohrungen (30) vorgesehen sind, durch die Befestigungselemente zur Halterung des Gasgenerators (3) und des Gassackes (4) hindurchführbar sind.

6. Seitenaufprallschutzeinrichtung nach einem oder mehreren der vorangegangenen Ansprüche, **dadurch gekennzeichnet, dass** das langgestreckte Gehäuse (2) - in Höhenrichtung gesehen - relativ flachbauend ausgebildet ist.

7. Seitenaufprallschutzeinrichtung nach einem oder mehreren der vorangegangenen Ansprüche, **dadurch gekennzeichnet, dass** außerhalb des Ausschusskanals (16) am plattenförmigen Befestigungsabschnitt (17) ein Halter (35) mit einer Einschiebemutter (36) vorgesehen ist, an der eine vorgelagerte Abdeckung (11) mittels einer Befestigungsschraube festlegbar ist.

## Claims

1. A lateral-impact protection device (1) for a passenger of a vehicle in the form of an inflatable gas bag (4), wherein an installation module (5) comprising at least a housing (2), a gas generator (3) and a gas bag (4) is fastened to an inner panel (6) of a side door (7), and an outlet opening (10) for the inflated gas bag (4) is provided on an upright wall portion (8) of a door lining (9) situated in front, wherein the housing (2) comprising a lower part (23a) and an upper part (23b) connected to the latter has a trough-shaped receiving portion (15) arranged on the lower part (23a), an expulsion duct (16) provided on the upper part (23b), and a fastening portion (17), and the receiving portion (15) extends through a recess (14) in the inner door panel (6) and projects into the door cavity (18) situated behind it, **characterized in that** the plate-shaped fastening portion (17) for fixing the housing (2) to the inner door panel (6) is arranged between the trough-shaped receiving portion (15) and the expulsion duct (16), and is formed by parallel flanges (24, 25) [of] the upper part (23b) [and] the lower part (23b), and the expulsion duct (16), provided locally with reinforcement beads (27), on the side facing the outlet opening (10) has a continuous projection or flanging (26) directed towards the outside.

2. A lateral-impact protection device according to Claim 1, **characterized in that** the housing (2) is made of steel sheet.

3. A lateral-impact protection device according to Claim 1, **characterized in that** at least one projecting pin, which engages in a corresponding opening in the inner door panel (6), is attached to the fastening portion (17) on the side facing the inner door panel (6).

4. A lateral-impact protection device according to Claim 1, **characterized in that** on the edge of the recess (14) the inner door panel (6) has a rounded projection (20) extending in the direction of the door window pane (19).

5. A lateral-impact protection device according to one or more of the preceding Claims, **characterized in that** bores (30), through which fastening elements for holding the gas generator (3) and the gas bag (4) can extend, are provided locally on the base (29) of the receiving portion (15).

6. A lateral-impact protection device according to one or more of the preceding Claims,
**characterized in that** the elongate housing (2) - as viewed in the vertical direction - is made relatively flat.

7. A lateral-impact protection device according to one or more of the preceding Claims, **characterized in that** a holder (35) with an insert nut (36), to which a covering (11) positioned in front can be fixed by means of a fastening screw, is provided outside the expulsion duct (16) on the plate-shaped fastening portion (17).

## Revendications

1. Dispositif de protection contre une collision latérale (1) pour le passager d'un véhicule sous la forme d'un sac gonflable (4), un module à encastrer (5), constitué d'au moins un boîtier (2), d'un générateur de gaz (3) et d'un sac gonflable (4), étant fixé sur une tôle intérieure (6) d'une porte latérale (7) et une ouverture de sortie (10) pour le sac (4) gonflé étant prévue sur une section de paroi verticale (8) d'un habillage de porte (9) placé devant, le boîtier (2), constitué d'une partie inférieure (23a) et d'une partie supérieure (23b) reliée à celle-ci, comportant une section de réception (15) en forme d'auge disposée sur la partie inférieure (23a), un canal de raccordement (16) prévu sur la partie supérieure (23b) et une section de fixation (17), et la section de réception (15) étant guidée à travers un évidement (14) de la tôle intérieure de porte (6) et pénétrant à l'intérieur de la cavité de porte (18) située derrière, **caractérisé en ce que** la section de fixation (17) en forme de plaque est disposée, pour la fixation du boîtier (2) sur la tôle intérieure de porte (6), entre la section de réception (15) en forme d'auge et le canal de raccordement (16), et est formée par des brides (24, 25) dirigées dans le même sens de la partie supérieure (23b) et de la partie inférieure (23a), et **en ce que** le canal de raccordement (16), pourvu par endroits de moulure de raidissement (27) présente, sur le côté tourné vers l'ouverture de sortie (10), une partie repliée ou bordée (26) périphérique, dirigée vers l'extérieur.

2. Dispositif de protection contre une collision latérale selon la revendication 1, **caractérisé en ce que** le boîtier (2) est fabriqué dans une tôle d'acier.

3. Dispositif de protection contre une collision latérale selon la revendication 1, **caractérisé en ce que** sur la section de fixation (17), sur le côté tourné vers la tôle intérieure de porte (6), est placé au moins un tenon saillant qui s'engage dans une ouverture correspondante de la tôle intérieure de porte (6).

4. Dispositif de protection contre une collision latérale selon la revendication 1, **caractérisé en ce que** la tôle intérieure de porte (6) présente, sur le bord de l'évidement (14), une partie de côté arrondie (20) s'étendant en direction de la vitre de fenêtre de porte (19).

5. Dispositif de protection contre une collision latérale selon une ou plusieurs des revendications précédentes, **caractérisé en ce que** sur le fond (29) de la section de réception (15) sont prévus par endroits des perçages (30) à travers lesquels peuvent être guidés les éléments de fixation pour la fixation du générateur de gaz (3) et du sac gonflable (4).

6. Dispositif de protection contre une collision latérale selon une ou plusieurs des revendications précédentes, **caractérisé en ce que** le boîtier (2) allongé - vu dans la direction de la hauteur - est réalisé relativement plat.

7. Dispositif de protection contre une collision latérale selon une ou plusieurs des revendications précédentes, **caractérisé en ce qu'**à l'extérieur du canal de raccordement (16), sur la section de fixation (17) en forme de plaque, il est prévu un support (35) avec un écrou à glissement (36) sur lequel un couvercle (11) placé devant peut être fixé au moyen d'une vis de fixation.
